(19) Europäisches Patentamt
European Patent Office
Office européen des brevets

(11) **EP 2 618 190 B1**

(12) **EUROPÄISCHE PATENTSCHRIFT**

(45) Veröffentlichungstag und Bekanntmachung des Hinweises auf die Patenterteilung:
**01.08.2018 Patentblatt 2018/31**

(51) Int Cl.:
*G02B 6/028* $^{(2006.01)}$    *G02B 6/42* $^{(2006.01)}$

(21) Anmeldenummer: **12151789.0**

(22) Anmeldetag: **19.01.2012**

(54) **Verfahren zum charakterisieren von Modenlaufzeitunterschieden in optischen Multimodefasern**

Method for characterising mode runtime differences in optical multimode fibres

Procédé de caractérisation de différences de durée de modes dans des fibres optiques multimodes

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.07.2013 Patentblatt 2013/30**

(73) Patentinhaber: **Deutsche Telekom AG**
**53113 Bonn (DE)**

(72) Erfinder: **Bunge, Christian-Alexander**
**12157 Berlin (DE)**

(74) Vertreter: **Braun-Dullaeus, Karl-Ulrich**
**Braun-Dullaeus Pannen**
**Patent- und Rechtsanwälte**
**Platz der Ideen 2**
**40476 Düsseldorf (DE)**

(56) Entgegenhaltungen:
**US-A1- 2004 012 835**

• **CARPENTER J ET AL: "Precise modal excitation in multimode fibre for control of modal dispersion and mode-group division multiplexing", 2011 37TH EUROPEAN CONFERENCE AND EXHIBITION ON OPTICAL COMMUNICATION (ECOC 2011) IEEE PISCATAWAY, NJ, USA, 2011, Seite 3 PP., XP002676551, ISBN: 978-1-4577-1918-9 & DATABASE INSPEC [Online] THE INSTITUTION OF ELECTRICAL ENGINEERS, STEVENAGE, GB; 2011, CARPENTER J ET AL: "Precise modal excitation in multimode fibre for control of modal dispersion and mode-group division multiplexing", Database accession no. 12356528**
• **STEPNIAK G ET AL: "Increasing multimode fiber transmission capacity by mode selective spatial light phase modulation", OPTICAL COMMUNICATION (ECOC), 2010 36TH EUROPEAN CONFERENCE AND EXHIBITION ON, IEEE, PISCATAWAY, NJ, USA, 19. September 2010 (2010-09-19), Seiten 1-3, XP031789891, ISBN: 978-1-4244-8536-9**
• **MECHELS S E ET AL: "High-resolution differential-mode delay measurements in optical fibers using a frequency-domain phase-shift technique", 1. Juni 1997 (1997-06-01), IEEE PHOTONICS TECHNOLOGY LETTERS, IEEE SERVICE CENTER, PISCATAWAY, NJ, US, PAGE(S) 794 - 796, XP011425319, ISSN: 1041-1135 * Zusammenfassung; Abbildung 1 ***

**Beschreibung**

Die vorliegende Erfindung betrifft die Verwendung einer Anordnung zum Charakterisieren von Modenlaufzeitunterschieden in einer zu charakterisierenden optischen Multimodefaser, die man insbesondere für optische Kurzstreckenverbindungen z. B. in Rechenzentren oder bei der Büronetzung verwendet.

Multimodefasern werden in hochbitratigen Kurzstreckenverbindungen, wie z. B. in Rechenzentren, Vermittlungsstellen oder auch Büroverkabelungen, eingesetzt. Die Datenraten steigen auch hier unaufhörlich, sodass zurzeit 10 Gbit/s über maximal 300m standardisiert sind. Da gerade bei Rechenzentren der Bedarf an schnellen Verbindungen rasant zunimmt, sind auch schon Lösungen für 40 Gbit/s und teilweise auch 100 Gbit/s in der Diskussion. Für solche Strecken müssen die verwendeten Fasern sehr harte Anforderungen hinsichtlich der Bandbreite erfüllen. Die größte Bandbreitenbegrenzung in Multimodefasern stellt die Modendispersion dar, die durch unterschiedliche Laufzeiten der einzelnen Fasermoden entsteht. Da die Übertragungseigenschaften davon abhängen, welche Moden genau angeregt werden bzw. wie viel Leistung tragen, lässt sich die Übertragungsqualität der Faser i. a. nicht sehr gut durch eine Bandbreitemessung charakterisieren.

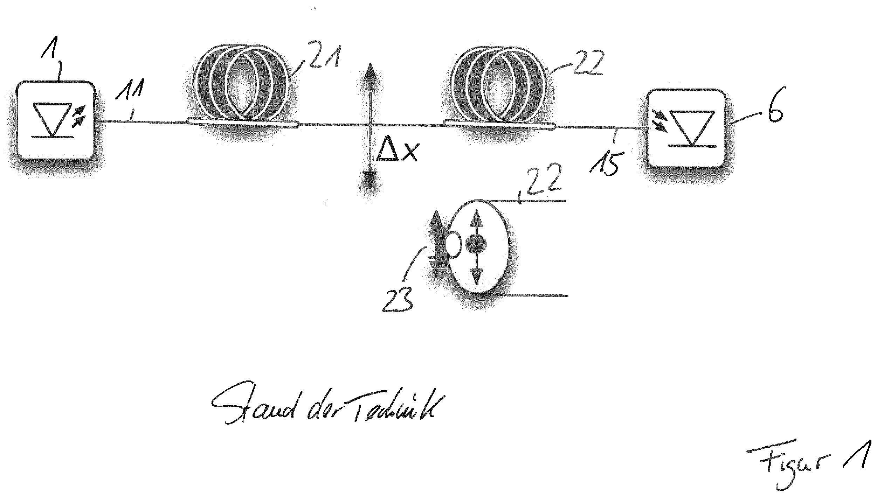

Vielmehr geht man in letzter Zeit dazu über, die Laufzeitunterschiede der Moden bzw. Modengruppen direkt über die DMD-Messung zu bestimmen und Anforderungen hinsichtlich der Modenlaufzeiten zu formulieren. Diese Messung regt allerdings prinzipbedingt nur die niedrigsten Moden aller Modenhauptgruppen an, da die Anregung über eine Einstrahlung mit einer Einmodenfaser parallel zur Faserachse, aber mit seitlichem Versatz erfolgt. Eine entsprechende Anordnung ist schemtatisch in Figur 1 gezeigt. Dementsprechend wird ein Lichtstrahl 11 beispielsweise durch einen Laser 1 erzeugt und durch eine Einmodenfaser 21 geleitet. Anschließend wird das Licht durch die zu untersuchende Mutlimodefaser 22 geleitet. Die Einmodenfaser 21 und Multimodefaser 22 sind dabei mit einem radialen Versatz Δx zueinander angeordnet, so dass der aus der Einmodenfaser austretende Lichtstrahl 23 außermittig auf die Multimodefaser 22 auftrifft. Fasermoden, die eine höhere Umfangsordnung besitzen, wie z. B. die Helixmoden, werden damit nicht angeregt und können somit auch nicht gemessen werden. Da aber bei den höheren Bitraten jede Störung der Übertragungseigenschaften einen großen Einfluss haben kann, wird es immer wichtiger, alle Moden zu charakterisieren. Diese Moden können nämlich durchaus bei der Übertragung in einem echten System angeregt werden und die Übertragungsqualität beeinflussen.

Heutzutage sind für die Charakterisierung vor allem zwei Verfahren gebräuchlich. Zum einen wird die Bandbreite der Faser bei einer standardisierten Einkoppelbedingung gemessen. Zum anderen versucht man, die Laufzeitunterschiede der Moden direkt über die DMD-Messung zu bestimmen. Für die standardisierts Bandbreitenmessungen verwendet man meist zwei verschiedene Anregungsbedingungen. Der sog. Restricted-Mode-Launch, RML, emuliert die Anregung mit einem vertikal emittierenden Laser (VCSEL) und erzeugt eine Leistungsverteilung über die Moden, die der Anregungsbedingung im realen System möglichst ähnlich ist. Dazu kommt noch eine Worst-Case-Anregungsbedingung, die möglichst alle Moden gleichmäßig anregt, um eine Information über das Gesamtverhalten der Faser zu erhalten. Diese Anregung nennt man den Overfilled Launch, OFL, und emuliert eine Ausleuchtung mit einer Lumineszenzdiode, die sowohl Fläche als auch Winkelbereich der Faser komplett ausleuchtet. Im Gegensatz zum ersten Eindruck, dass man damit wirklich den kritischsten Fall emuliert, ist diese Anregungsbedingung zwar recht kritisch, weil sehr viel Leistung in die höchsten Moden gekoppelt wird, die ihre Leistung im Bereich der Kern-Mantel-Grenzfläche konzentrieren, wo die Profilfehler oft auftreten. Aber es gibt durchaus kritischere Anregungen, bei denen z. B. nur der schnellste und der langsamste Mode der Faser angeregt werden. Auch wenn die beiden Anregungsbedingungen ganz konkrete Leistungsverteilungen in realen Systemen emulieren, so ist die Genauigkeit relativ schlecht, weil reale Leistungsverteilungen schwanken und je nach verwendetem Sendemodul von diesen standardisierten Verteilungen z.T. deutlich abweichen können. Aus diesem Grunde wird spätestens ab Datenraten von 10 Gbit/s zusätzlich die DMD-Messung zur Charakterisierung der Laufzeitunterschiede der Moden empfohlen. Die DMD-Messung soll prinzipiell einzelne Modengruppen selektiv anregen, so dass eine Laufzeitmessung dieser einzelnen Moden bzw. Modengruppen möglich wird. Die Genauigkeit des Verfahrens hängt also maßgeblich von der Selektivität der Anregung ab. Die Einstrahlung erfolgt bei der klassischen DMD-Messung mittels einer Einmodenfaser, die zwar parallel zur Faserachse, aber mit kontrolliertem seitlichen Versatz die zu untersuchende Multimodefaser selektiv anregt. Die Selektivität ist jedoch nicht sehr hoch.

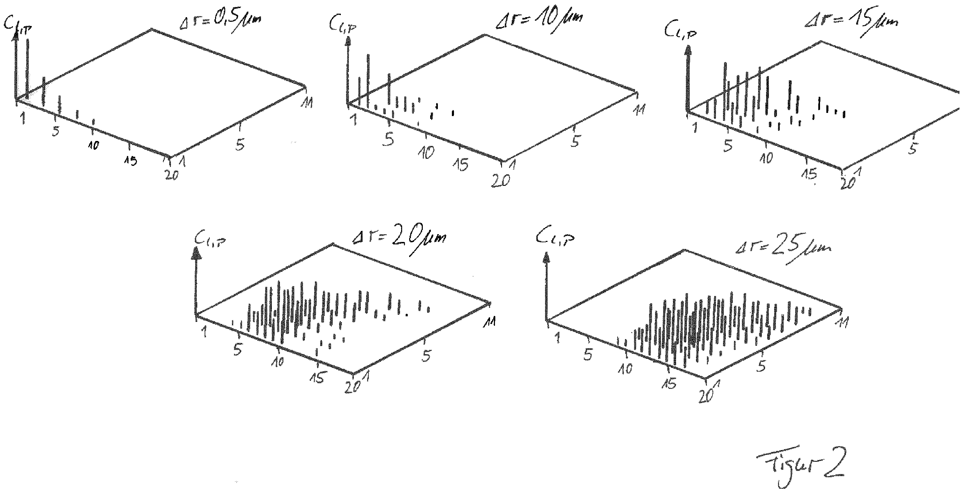

In Figur 2 ist die relative Leistungsverteilung $C_{l,p}$ über die Fasermoden bei verschiedenen seitlichen Versätzen Δr dargestellt. Man erkennt recht deutlich, dass mit zunehmendem seitlichen Versatz, also bei Anregung der höheren Fasermoden, die Zahl der zusätzlich angeregten Moden stark ansteigt. Insbesondere hier ist die Selektivität bzgl. der Moden, aber sogar auch hinsichtlich der Modengruppen (die sich i. a. noch stärker hinsichtlich ihrer Laufzeiten von einander unterscheiden) unbefriedigend. Zudem ist zu man erkennen, dass die Anregung mit einer seitlich verschobenen Einmodenfaser in erster Linie die niedrigsten Moden einer jeden Modengruppe anregt und kaum höhere Moden der Modengruppe angeregt werden, die eine höhere Umfangsordnung aufweisen und ihre Feldverteilung stärker im Außenbereich des Kerns konzentrieren. Dadurch sind eben diese Moden besonders stark von Störungen im Außenbereich des Kerns betroffen und sollten bei der Charakterisierung der Faser mit betrachtet werden.

Ziel der vorliegenden Erfindung ist es, die Charakterisierung der Modenlaufzeitenunterschiede optischer Multimodefasern zu verbessern, in dem die einzelnen Moden bzw. Modengruppen möglichst selektiv angeregt werden und die Laufzeit dieser Moden durch Anregung und Empfang kurzer Pulse wie bei der Differential-Mode-Delay-Messung (DMD-Messung) bestimmt wird.

Der Kern der Erfindung liegt darin, dass im Gegensatz zur DMD-Messung die Anregung nicht über eine seitlich verschobene Einmodenfaser erfolgt, sondern unter Verwendung einer Anordnung mit einem ortsaufgelösten Lichtmodulatoren (Spatial-Light-Modulator, SLM) durchgeführt wird, mit denen eine deutlich selektivere Anregung möglich ist und auch mehr verschiedene Moden angeregt werden können. Damit kann die Fasercharakterisierung aussagekräftiger gemacht werden. Mit einem ortsaufgelösten Lichtmodulator lassen sich an der Faserstirnfläche gezielt nahezu beliebige Feldverteilungen erzeugen, so dass man jede Mode der Faser gezielt anregen und bei Bedarf einzeln seine Laufzeit messen kann. Insbesondere kann mit Hilfe eines ortsaufgelösten Lichtmodulators die Intensität und/oder die Phase eines Lichtstrahls gezielt an einem definierten Querschnittsbereich oder mehreren definierten Querschnittsbereichen verändert werden.

Solche Anordnungen sind an sich bereits aus der Veröffentlichung von Joel Carpenter und Timothy D. Wilkinson, "Precise modal excitation in multimode fibre for control of modal dispersion and mode-group division multiplexing" oder aus der Veröffentlichung von G. Stepniak, L. Maksymiuk und J. Siuzdak, "Increasing Multimode Fiber Tranmission Capacity by Mode Selectively Spatial Light Phase Modulation" bekannt. Dort wird eine solche Anordnung allerdings für die gezielt unterschiedliche Anregung von Moden verwendet, zum Zwecke der Erzeugung eines Modenmultiplexing und damit zur Erhöhung der Bandbreite.

Die Veränderung der Einkopplung bzw. die Modulation des Eingangslichtstrahls erfolgt vorzugsweise mittels einer Ansteuerung über eine Grafikkarte, die einzelne Pixel des ortsaufgelösten Lichtmodulators entweder hinsichtlich der Phase, nämlich insbesondere über eine Brechzahlveränderung, oder der Amplitude kontrollieren kann. Somit sind keine mechanischen Bauelemente notwendig und nach einmaliger Justage lassen sich alle Anregungsbedingungen reproduzieren, mit insbesondere beliebig hoher Wiederholgenauigkeit. Des Weiteren lassen sich auch Fasermoden anregen, die mit der klassischen DMD-Messung nicht charakterisiert werden können.

Das vorgeschlagene Verfahren beruht darauf, dass das in die Faser eingestrahlte Feld direkt an die Feldverteilung des anzuregenden Modes angepasst werden kann. Bei z.B. einer vollkommenen Übereinstimmung der Feldverteilung der Anregung mit der Feldverteilung des anzuregenden Modes wird dieser ausschließlich angeregt und 100% der eingestrahlten Leistung wird in eben diese Mode gekoppelt. Der relative Leistungsanteil der eingekoppelten Welle kann über sog. Überlappintegrale bestimmt werden:

$$C_{l,p} = \frac{\left|\iint\limits_{F} E_{Anregung} \cdot E_{l,p}^{*} dF\right|^2}{\left|\iint\limits_{F} E_{Anregung} \cdot E_{Anregung}^{*} dF\right| \cdot \left|\iint\limits_{F} E_{l,p} \cdot E_{l,p}^{*} dF\right|}$$

Hierbei steht $C_{l,p}$ für den relativen Anteil der Gesamtleistung, die in den $LP_{l,p}$-Mode eingekoppelt wird. $F$ ist die Faserendfläche (genau genommen sogar die gesamte Fläche, in der die Faserendfläche liegt, also unendlich ausgedehnt), $E_{Anregung}$ und $E_{l,p}$ stehen für die Feldverteilungen des anregenden Feldes und des Modes, des Leistungseinkopplung bestimmt werden soll. Die beiden Indices $l$ und $p$ beschreiben die Umfangsordnung und die radiale Ordnung des LP-Modes. Hierbei erkennt man, dass man nur dann eine hohe Modenselektivität erreicht, wenn das anregende Feld dem des Modes sehr ähnlich wird. LP-Moden, die in Multimodefasern ausbreitungsfähig sind, nehmen mit zunehmender radialer Ordnung immer mehr Maxima bzw. Minima entlang des Radius an. Die $LP_{0,p}$-Moden weisen auf der Faserachse ihr Maximum auf, während alle weiteren Moden dort eine Nullstelle haben. Die Verteilung über den Winkel φ ist sinus- und kosinusförmig, so dass man die Feldverteilung der LP-Moden allgemein so beschreiben kann:

$$E_{l,p} = R_{l,p}(r) \cdot \begin{cases} \sin(p \cdot \varphi) \\ \cos(p \cdot \varphi) \end{cases}$$

Hierbei steht $R_{l,p}(r)$ für die, im allgemeinen unbekannte, Radiusabhängigkeit der Feldverteilung des $LP_{l,p}$-Modes, die für Fasern mit einem parabolischen Brechzahlprofil sehr gut über sog. Laguerre-Gauß-Verteilungen angenähert werden können. Bei kleinen Abweichungen von diesem Brechzahlprofil ergeben sich zwar leicht unterschiedliche Feldverteilungen; die Unterschiede zu den o.g. Verteilungen sind aber sehr klein und können i. a. vernachlässigt werden.

Die Moden mit höherer Umfangsordnung weisen also eine immer größere Anzahl an Maxima und Minima entlang des Umfangs auf bzw. zeigen eine gewisse Rotationssymmetrie. Genau diese Symmetrie kann man mit einem seitlich versetzten Anregungsfeld wie bei der klassischen DMD-Messung nie erreichen. Wenn man die Feldverteilung als ungefähr Gauß-förmig annimmt, was allgemein akzeptiert ist, ergibt sich ein anregendes Feld bei einem seitlichen Versatz $\Delta x$ beispielsweise in x-Richtung:

$$E_{AnregungDMD}(x, y) = E_0 \exp\left(\frac{(x - \Delta x)^2 + y^2}{2w_0^2}\right)$$

Hier steht wofür den Fleckradius, der in Einmodenfasern dem Modenfeldradius entspricht und im Bereich des Kernradius der Faser liegt. Eo stellt die maximale Feldstärke dar, die bei ($\Delta x$, 0) auftritt. Die exzentrische Anregung erzeugt also ein Maximum (hier in diesem Beispiel direkt auf der x-Achse bei $\varphi = 0$, da die Faser aber i. a. rotationssymmetrisch ist, kann man das Koordinatensystem beliebig verdrehen), jedoch kein weiteres Maximum oder Minimum auf der gegenüberliegenden Stelle bei $\varphi = \pi$, wie es für die vollständige Anregung eines jeden LP-Modes notwendig wäre. Dadurch ergibt sich eine Leistungsverteilung, die sich über mehrere Moden erstreckt.

Mit dem ortsaufgelösten Lichtmodulator kann man die Feldverteilung nun zweidimensional steuern und somit das anregende Feld so anpassen, dass man der Feldverteilung des gewünschten LP-Modes möglichst nahe kommt, beispielsweise auf eine Übereinstimmung von 90% und zum Teil sogar über 95%. Die Ansteuerung erfolgt insbesondere wie bei einer Grafikkarte über Ansprechen von Pixels, die in einem kartesischen Koordinatensystem angeordnet sind und über x- und y-Positionen angesprochen werden können. Es gibt sowohl ortsaufgelöste Phasenmodulatoren wie auch ortsaufgelöste Amplitudenmodulatoren. In vorliegenden Fall ist eine ortsaufgelöste Amplitudensteuerung der direkte Weg zur Erzeugung einer Feldverteilung, die dem des anzuregenden Modes am nächsten kommt.

Gegenüber der Bandbreitenmessung hat das vorgeschlagene Verfahren den Vorteil, dass man die Laufzeitunterschiede der einzelnen Fasermoden direkt messen kann. Dadurch erhält man Aussagen über die Qualität der Faser, die unabhängig von der konkreten Anregungsbedingung sind. Wenn man einmal die Laufzeiten der Moden bestimmt hat, kann man für beliebige Anregungsbedingungen bzw. Leistungsverteilungen die jeweiligen resultierenden Bandbreiten und Impulsantworten bestimmen. Dies geschieht durch eine jeweils gemäß der Leistungsverteilung $C_{l,p}$ gewichtete und gemäß der Laufzeiten $\tau_{l,p}$ zeitlich verschobene Überlagerung eines kurzen Eingangspulses $S_{ein}(t)$.

$$h(t) = \sum_{l,p} C_{l,p} \cdot s_{ein}(t - \tau_{l,p})$$

Die so berechnete Bandbreite h(t) wird zur Charakterisierung von Fasern verwendet. Ein Beispiel dafür ist die sog. berechnete Effective Modal Bandwidth, $EMB_c$, die man basierend auf den Laufzeiten der Faser bestimmt, die durch die klassische DMD-Messung ermittelt wurden. Allerdings lassen sich auch für jede andere Anregungsbedingung die zu erwartende Bandbreite rechnerisch bestimmen.

Das vorgeschlagene Verfahren ermöglicht die Anregung einzelner Moden der Faser, so dass man im Prinzip die Laufzeit $\tau_{l,p}$ jeder Fasermode gesondert messen kann. Dadurch ist eine verbesserte umfassende Charakterisierung der Modenlaufzeiten einer Faser möglich.

Die Erfindung wird anhand der Figuren nachfolgend näher erläutert. Hierin zeigt:

Figur 1     schematisch eine Anordnung zum Untersuchen von optischen Multimodefasern DMD-Verfahren nach dem Stand der Technik;

Figur 2     eine Leistungsverteilung über die Modegruppen und die Moden innerhalb der Modengruppe bei verschiedenen radialen Versätzen beim DMD-Verfahren nach dem Stand der Technik;

Figur 3     schematisch eine erste Anordnung zum Untersuchen von optischen Multimodefasern DMD-Verfahren, mit einem ortsaufgelösten Lichtmodulator als Amplitudenmodulator;

Figur 4     schematisch eine zweite Anordnung zum Untersuchen von optischen Multimodefasern DMD-Verfahren, mit einem ortsaufgelösten Lichtmodulator als Amplitudenmodulatorin in Reflexion mit einem halbdurchlässigen Spiegel zum Umleiten des reflektierten Strahls;

Figur 5     schematisch eine erfindungsgemäße Anordnung zum Untersuchen von optischen Multimodefasern DMD-Verfahren, mit einem ortsaufgelösten Lichtmodulator als Amplitudenmodulatorin in Reflexion unter einem Einfallswinkel ungleich Null, so dass der reflektierte Strahl außerhalb des einfallenden Feldes empfangen werden kann;

Figur 6 a) schematisch den Querschnitt des ortsaufgelösten Lichtmodulators mit selektiver Verdunkelung, b) schematisch den Querschnitt des modulierten Lichtstrahls mit erzeugter durch den Lichtmodulator erzeugter selektiver Verdunkelung.

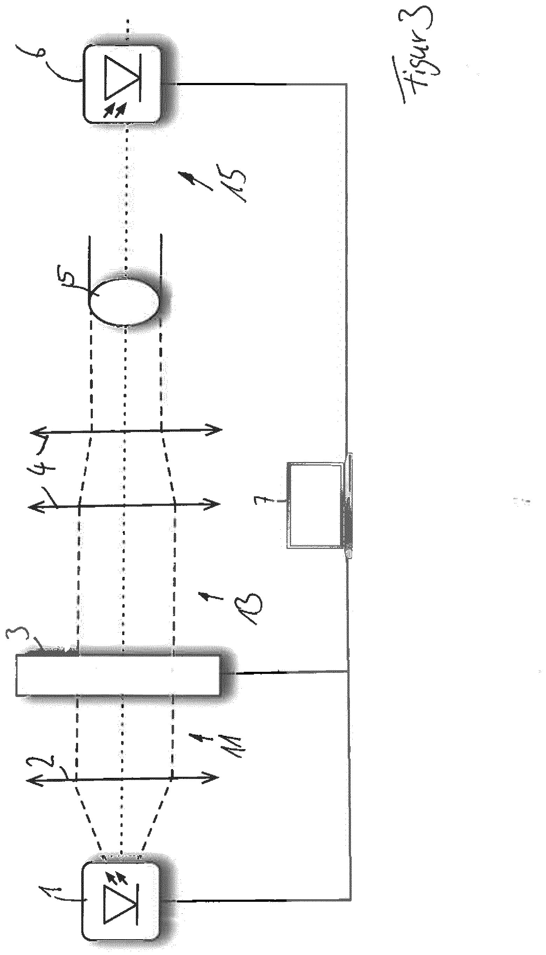

Figur 3 zeigt einen beispielhaften prinzipiellen Aufbau, mit dem man eine höchst selektive Anregung einzelner Moden nach dem Verfahren realisieren kann. Mit einem Laser 1 wird kohärentes Licht erzeugt und mittels einer Linse 2 aufgeweitet und kollimiert. Der Laser 1 und die Linse 2 sind Teile einer Lichterzeugungsanordnung zum Erzeugen eines kollimiertem Eingangslichtstrahles 11. Mit diesem kollimierten Eingangslichtstrahl 11 wird nun ein ortsaufgelöster Lichtmodulator 3 möglichst gleichmäßig ausgeleuchtet, wobei die Phase des Eingangslichtstrahls über den gesamten Querschnitt des Eingangslichtstrahls konstant ist. Hinter dem ortsaufgelösten Lichtmodulator 3 hat das Licht, nun der Ausgangslichtstrahl 13, eine Feldverteilung gemäß der ortsaufgelösten Transferfunktion T(x, y), die beschreibt, wie viel der auf den Lichtmodulator 3 auftreffenden Leistung von diesem durchgelassen wird:

$$E_{13}(x,y) = E_0 \cdot T(x,y) \qquad \text{mit} \qquad T(x,y) = \frac{E_{13}(x,y)}{E_{11}}$$

$E_{11}$ bzw. $E_{13}$ bezeichnet jeweils das elektrische Feld des Lichts des Eingangs- bzw. Ausgangslichtstrahls 11, 13 an den jeweiligen Querschnittspositionen x, y. Es wird angenommen, dass das auf dem ortsaufgelösten Lichtmodulator 3 projizierte Feld konstant Eo beträgt. Das durch den ortsaufgelösten Lichtmodulator 3 strukturierte Feld wird nun mittels einer Abbildungsoptik 4 auf eine Endfläche einer zu untersuchenden Multimodefaser 5 projiziert. Der aus der Multimodefaser 5 heraustretende Ausgangslichtstrahl 15 wird mit einer Fotodiode 6 aufgenommen. Die Ansteuerung des ortsaufgelösten Lichtmodulators 3 erfolgt über einen Rechner 7, der an den ortsaufgelösten Lichtmodulator angeschlossen ist. Wenn die entsprechende Anregung erst einmal realisiert ist, kann man wie bei der klassischen DMD-Messung mit dem Laser 1 einen sehr kurzen Lichtpuls erzeugen und am Ende der Faser wieder empfangen, um die Laufzeit des Pulses zu messen.

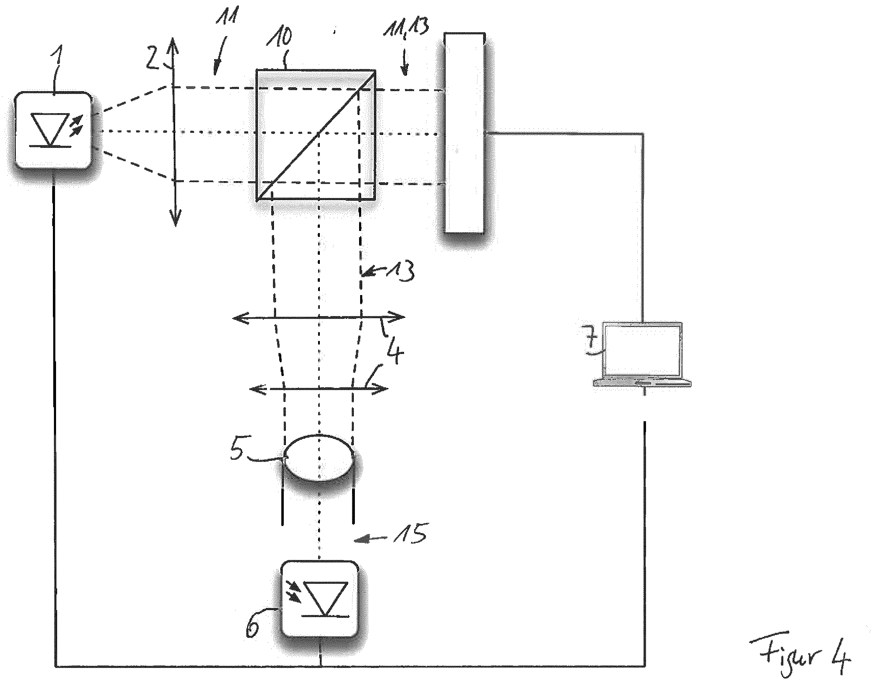

Figur 4 zeigt einen alternativen Aufbau der Anordnung, die weitgehend dem zuvor beschriebenen Aufbau entspricht. Der ortsaufgelöste Lichtmodulator 3 wird abweichend in Reflexion betrieben, weil man dadurch die Effizienz der Amplitudensteuerung durch zweimaliges Durchlaufen des ortsaufgelösten Lichtmodulators erhöhen kann. In diesem Falle wird Anordnung so modifiziert, dass das reflektierte Licht aufgenommen werden kann. Ohne weitere Vorkehrungen würde das Licht denselben Weg wieder zurück nehmen, aus dem es gekommen ist. Dieses wird dadurch gelöst, indem ein halbdurchlässiger Spiegel 10 verwendet wird. Hierbei ergeben sich allerdings prinzipinhärente Verluste durch den Spiegel.

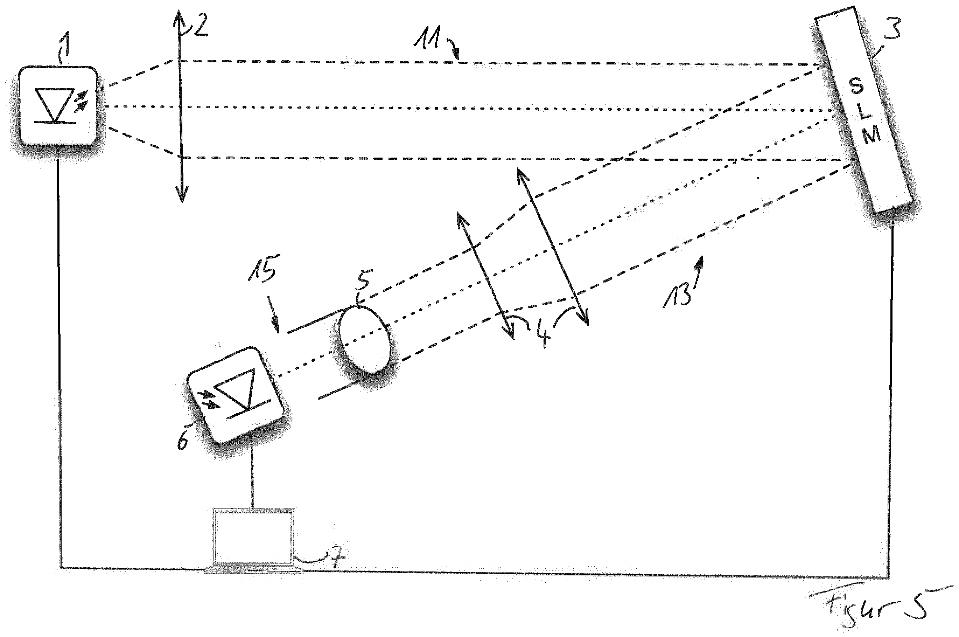

Figur 5 zeigt einen Aufbau der erfindungsgemäßen Anordnung, die weitgehend der zuvor beschriebenen Aufbauten entspricht. Abweichend erfolgt die Einstrahlung unter einem möglichst kleinen Winkel (allerdings >0°) bezüglich des Lots auf die Reflexionsebene des ortsaufgelösten Lichtmodulators 3. Dieser Winkel kann die Feldverteilung potentiell verfälschen; aber durch Wahl eines sehr kleinen Winkels oder durch Anpassung der Phase mittels einer keilförmigen Anordnung, die eine lineare Phase auf die Wellenfront aufbringt, lässt sich der Einfluss sehr klein halten.

Auch mit Phasenmodulatoren kann man eine hohe Selektivität der Modenanregung erzielen. Es können mit sehr einfachen binären Phasenmodulatoren, die also nur die Zustände $\phi \in \{0, \pi\}$ annehmen können, Koppeleffizienzen erzielt werden, die im Bereich von ca. 50% liegen. Hier wird nur der Effekt genutzt, dass sich das Vorzeichen des elektrischen Feldes bei jedem Nulldurchgang ändert. Somit lassen sich dann die Modenfelder dadurch einstellen, dass man in den Regionen die Phase auf $\phi = \pi$ schaltet, in denen die Feldstärke negativ wird. Ein Aufbau bei Verwendung von Phasenmodulatoren kann in gleicher Art erfolgen wie die Anordnungen nach den Figuren 3 bis 5.

Auch dadurch, dass im erfindungsgemäßen Aufbau keine beweglichen Teile enthalten sind und der ortsaufgelöste Lichtmodulator 3 über einen Rechner 7 digital angesteuert wird, ermöglicht diese Anordnung eine quasi beliebig hohe Reproduzierbarkeit. Die Selektivität der Einkopplung hängt nun nur noch von wenigen Faktoren ab:

- Die örtliche Auflösung des Lichtmodulators 3 sowie die Zahl Quantisierungsstufen bzgl. der Amplitude beschränken die Genauigkeit, mit der das anregende Feld konstruiert werden kann. Mit heute verfügbaren Technologien lassen sich aber Koppeleffizienzen im Bereich von 90% bis 99% erreichen, was deutlich besser ist als die herkömmliche Anregung mittels seitlich versetzter Einmodenfaser. Dort erreicht man nur für die zentrische Einkopplung eine gute Selektivität, bei den höheren Moden sinkt die Koppeleffizienz deutlich.

- Die Wahl der Art des ortsaufgelösten Lichtmodulators hat einen Einfluss auf die Genauigkeit der Einkopplung. Da man in erster Linie eine Feldstärkeverteilung erzeugen muss, sind Amplitudenmodulatoren i. a. geeigneter. Phasenmodulatoren funktionieren zwar auch, aber mit schlechterer Selektivität.

- Die Ausrichtung der Anordnung hinsichtlich Rechtwinkligkeit und Zentrizität sowie die Qualität der Abbildung beeinflussen die Anregung, wobei diese Einschränkungen für alle optischen Freistrahlanordnungen gelten.

- Die Modenfelder der zu untersuchenden Faser hängen streng genommen vom Brechzahlprofil ab und sind bei Abweichung vom optimalen Profil leicht unterschiedlich. Untersuchungen ergeben allerdings, dass die Variation der Modenfeldverteilung sehr klein ist für moderate Abweichungen von optimalen Brechzahlprofil. Da diese Anordnung insbesondere für die Charakterisierung von Fasern für sehr hohe Übertragungsraten und damit mit nur sehr geringen Abweichungen vom optimalen Brechzahlprofil vorgesehen ist, kann man diesen Einfluss problemlos vernachlässigen.

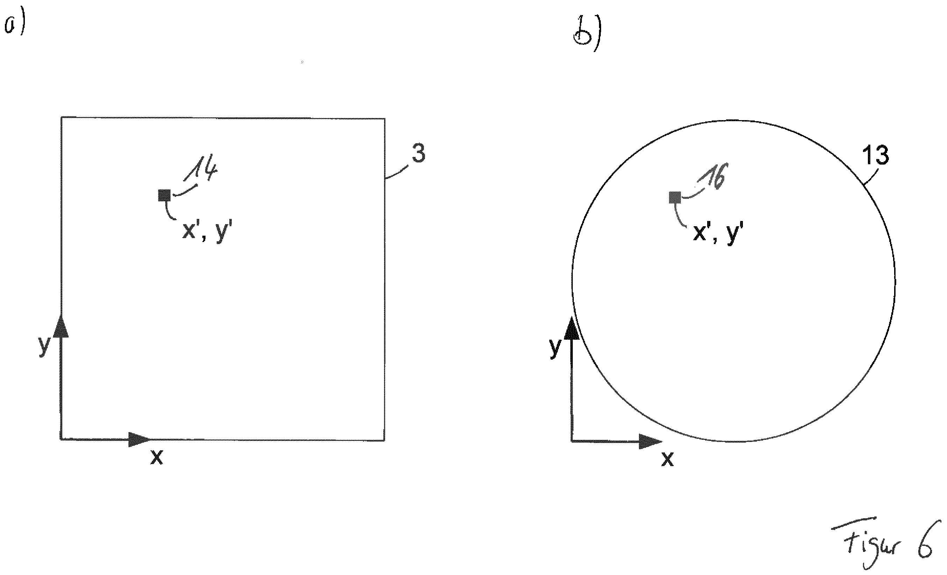

In Figur 6a ist die Funktionsweise des ortsaufgelösten Lichtmodulators 3 vereinfacht dargestellt. An einer bestimmten Stelle x', y' im Querschnitt des Lichtmodulators 3 wird eine Veränderung der Lichtdurchlässigkeit erzeugt, beispielsweise durch einen Farbpunkt 14. Entsprechend der lokal auf dem Lichtmodulator veränderten Lichtdurchlässigkeit weist der modulierte Lichtstrahl 13 an der entsprechenden Stelle x, y im Querschnitt eine Lichtstrahlkomponente 16 mit einem veränderten Lichtspektrum auf. Durch die gezielte Veränderung der Lichtdurchlässigkeit an bestimmten Querschnittspositionen x,y können gezielt spezielle örtliche Feldverteilungen erreicht und damit selektiv einzelne Moden angeregt werden.

**Bezugszeichenliste**

| | |
|---|---|
| 1 | Laser |
| 2 | Linse |
| 3 | ortsaufgelöster Lichtmodulator |
| 4 | Linse |
| 5 | Multimodefaser |
| 6 | Fotodiode |
| 10 | halbdurchlässiger Spiegel |
| 11 | Eingangslichtstrahl |
| 13 | modulierter Lichtstrahl |
| 14 | Farbpunkt |
| 15 | Ausgangslichtstrahl |
| 16 | modifizierte Lichtstrahlkomponente |
| 21 | Einmodenfaser |
| 22 | Multimodenfaser |
| 23 | aus der Einmodenfaser austretender Lichtstrahl |

| | |
|---|---|
| E | elektrisches Feld des Lichts |
| x, y | Koordinaten im Querschnitt des Lichtstrahls |

**Patentansprüche**

1. Verwendung einer Anordnung zum Charakterisieren von Modenlaufzeitunterschieden in einer zu charakterisierenden optischen Multimodefaser,
   die Anordnung umfasst:

   einen Laser (1) zum Erzeugen eines kohärenten Eingangslichtstrahls (11),
   einen Lichtmodulator (13) zum Modulieren des Eingangslichtstrahls (11) zu einem modulierten Lichtstrahl (13),
   wobei der Lichtmodulator ein ortsaufgelöster Lichtmodulator (3) ist, anhand dessen die elektrische Feldstärke ($E_{x,y}$) und/oder die Phase des Eingangslichtstrahls (11) von einzelnen Querschnittsbereichen (x,y) gezielt verändert, insbesondere die elektrische Feldstärke verringert, werden kann,
   eine Grafikkarte zur Ansteuerung des Lichtmodulators (13),
   eine zu untersuchende Multimodefaser (5), die mit dem modulierten Lichtstrahl (13) beaufschlagt wird, sowie

einen Lichtsensor (6) zum Aufnehmen eines aus der Multimodefaser (5) austretenden Ausgangslichtstrahls (15),

die Verwendung umfasst die folgenden Verfahrensschritte:

- Erzeugen des kohärenten Eingangslichtstrahls (11), umfassend insbesondere kollimiertes Licht, mittels des Lasers (1),
- Beaufschlagen des ortsaufgelösten Lichtmodulators (3) in Reflexion mit dem Eingangslichtstrahl (11) unter einem Winkel bezüglich des Lots auf die Reflexionsebene des Lichtmodulators (3), wodurch ein örtlich modulierter Lichtstrahl (13) erzeugt wird, der aus dem Eingangslichtstrahl (11) herausreflektiert wird und einen anderen Weg nimmt, als den, aus dem er gekommen ist,
- Leiten des örtlich modulierten Lichtstrahls (13) durch die zu untersuchende Multimodefaser (5), wobei die zu charakterisierenden Multimodefaser (5) ein Ausgangslichtstrahl (15) verlässt,
- Aufnehmen des Ausgangslichtstrahls (15) durch den Lichtsensor (6), und
- Auswerten des Ausgangslichtstrahls (15),
- wobei mithilfe des ortsaufgelösten Lichtmodulators (3) eine Mode der Faser gezielt angeregt wird und seine Laufzeit gemessen wird.

2. Verwendung nach dem vorherigen Anspruch,
**dadurch gekennzeichnet,**
**dass** die Anordnung eine Grafikkarte zum Ansteuern des ortsaufgelösten Lichtmodulators (3) umfasst.

3. Verwendung nach einem der vorherigen Ansprüche,
**dadurch gekennzeichnet,**
**dass** eine elektrische Feldstärke ($E_{13\,x,y}$) des modulierten Lichtstrahls (13) selektiv für einzelne Querschnittsbereiche (x, y) anhand des ortsaufgelösten Lichtmodulators (3) eingestellt wird.

4. Verwendung nach einem der vorherigen Ansprüche,
**dadurch gekennzeichnet,**
**dass** eine elektrische Feldstärke ($E_{11}$) des Eingangslichtstrahls (11) im Wesentlichen gleichmäßig über den gesamten Querschnitt des Eingangslichtstrahls (11) verteilt ist.

5. Verwendung nach einem der vorherigen Ansprüche,
**dadurch gekennzeichnet,**
**dass** die Modulation des Eingangslichtstrahls (11) mittels einer Ansteuerung über eine Grafikkarte erfolgt.

**Claims**

1. Use of an arrangement for characterizing mode propagation time differences in an optical multimode fibre to be characterized,
the arrangement comprising:

a laser (1) for generating a coherent input light beam (11),
a light modulator (13) for modulating the input light beam (11) into a modulated light beam (13), wherein the light modulator is a spatially resolved light modulator (3), by means of which the electrical field strength ($E_{x,y}$) and/or the phase of the input light beam (11) of individual cross-sectional regions (x,y) can be modified, in particular reduced,
a graphics card for controlling the light modulator (13),
a multimode fibre (5) to be investigated, into which the modulated light beam (13) is injected, and
a light sensor (6) for capturing an output light beam (15) emerging from the multimode fibre (5),
wherein the use comprises the following method steps:

- generating the coherent input light beam (11), comprising in particular collimated light, by means of the laser (1),
- exposure of the spatially resolved light modulator (3) with the input light beam (11) in reflection at an angle with respect to the perpendicular to the plane of reflection of the light modulator (3), as a result of which a spatially modulated light beam (13) is generated, which is reflected out of the input light beam (11) and follows a different path to that from which it has come,

• guiding the spatially modulated light beam (13) by means of the multimode fibre (5) to be investigated, wherein an output light beam (15) exits the multimode fibre (5) to be investigated,
• capturing the output light beam (15) by the sensor (6) and
• evaluation of the output light beam (15),
• wherein by means of the spatially resolved light modulator (3) one mode of the fibre is selectively excited and its propagation time measured.

2. Use according to the previous claim, **characterized in that** the arrangement comprises a graphics card for controlling the spatially resolved light modulator (3) .

3. Use according to any one of the preceding claims, **characterized in that** an electrical field strength ($E_{13\,x,y}$) of the modulated light beam (13) is selectively adjusted for individual cross-sectional regions (x,y) using the spatially resolved light modulator (3).

4. Use according to any one of the preceding claims, **characterized in that** an electrical field strength ($E_{11}$) of the input light beam (11) is distributed substantially uniformly over the entire cross-section of the input light beam (11).

5. Use according to any one of the preceding claims, **characterized in that** the input light beam (11) is modulated under the control of a graphics card.

## Revendications

1. Utilisation d'un système pour caractériser des différences de temps de fonctionnement modaux dans une fibre optique multimodale à caractériser,
le système comprenant :

un laser (1) pour produire un faisceau lumineux d'entrée cohérent (11),
un modulateur de lumière (13) pour moduler le faisceau lumineux d'entrée (11) en un faisceau lumineux modulé (13), le modulateur de lumière étant un modulateur de lumière à résolution locale (3) à l'aide duquel l'intensité de champ électrique ($E_{x,y}$) et/ou la phase du faisceau lumineux d'entrée (11) de zones transversales individuelles (x,y) peut être précisément modifiée, notamment l'intensité de champ électrique peut être réduite,
une carte graphique pour piloter le modulateur de lumière (13),
une fibre multimodale à analyser (5), qui est sollicitée avec le faisceau lumineux modulé (13), ainsi qu'
un capteur de lumière (6) pour enregistrer un faisceau lumineux de sortie (15) sortant de la fibre multimodale (5),
l'utilisation comprenant les étapes de procédé suivantes :

• production du faisceau lumineux d'entrée cohérent (11), comprenant notamment une lumière collimatée, au moyen du laser (1),
• sollicitation du modulateur de lumière à résolution locale (3) en réflexion avec le faisceau lumineux d'entrée (11) sous un angle par rapport à la perpendiculaire au plan de réflexion du modulateur de lumière (3), un faisceau lumineux localement modulé (13) étant produit de ce fait, qui est réfléchi hors du faisceau lumineux d'entrée (11) et prend un autre chemin que celui par lequel il est venu,
• direction du faisceau lumineux localement modulé (13) à travers la fibre multimodale à analyser (5), la fibre multimodale à caractériser (5) quittant un faisceau lumineux de sortie (15),
• enregistrement du faisceau lumineux de sortie (15) par le capteur de lumière (6)
et
• exploitation du faisceau lumineux de sortie (15),
• un mode de la fibre étant précisément activé et sa durée mesurée à l'aide du modulateur de lumière à résolution locale (3).

2. Utilisation selon la revendication précédente, **caractérisée en ce que** le système comprend une carte graphique pour piloter le modulateur de lumière à résolution locale (3).

3. Utilisation selon l'une quelconque des revendications précédentes, **caractérisée en ce qu'**une intensité de champ électrique ($E_{13\,x,y}$) du faisceau lumineux modulé (13) est réglée sélectivement pour des zones transversales individuelles (x,y) à l'aide du modulateur de lumière à résolution locale (3).

**4.** Utilisation selon l'une quelconque des revendications précédentes, **caractérisée en ce qu'**une intensité de champ électrique ($E_{11}$) du faisceau lumineux d'entrée (11) est répartie pour l'essentiel uniformément sur toute la section transversale du faisceau lumineux d'entrée (11).

**5.** Utilisation selon l'une quelconque des revendications précédentes, **caractérisée en ce que** la modulation du faisceau lumineux d'entrée (11) a lieu au moyen d'un pilotage par le biais d'une carte graphique.

Figur 1

Stand der Technik

Figur 2

Figur 3

Figur 4

a)

b)

EP 2 618 190 B1

Figur 6

## IN DER BESCHREIBUNG AUFGEFÜHRTE DOKUMENTE

**In der Beschreibung aufgeführte Nicht-Patentliteratur**

- **JOEL CARPENTER ; TIMOTHY D. WILKINSON.** *Precise modal excitation in multimode fibre for control of modal dispersion and mode-group division multiplexing*

- **G. STEPNIAK ; L. MAKSYMIUK ; J. SIUZDAK.** *Increasing Multimode Fiber Tranmission Capacity by Mode Selektively Spatial Light Phase Modulation*